# EUROPEAN PATENT APPLICATION

(11) **EP 4 425 679 A1**
(43) Date of publication of application: **04.09.2024**
(21) Application number: 22886830.3
(22) Date of filing: 19.10.2022
(51) Int. Cl.: H01M 50/443, H01M 50/403, H01M 50/449

(54) **SLURRY COMPOSITION FOR NONAQUEOUS SECONDARY BATTERY FUNCTIONAL LAYERS, SEPARATOR FOR NONAQUEOUS SECONDARY BATTERIES, AND NONAQUEOUS SECONDARY BATTERY**

(30) Priority: 28.10.2021 JP 2021176882
(71) Applicant: Zeon Corporation, Tokyo 100-8246 (JP)
(72) Inventor: YAMADA, Tomofumi, Tokyo 100-8246 (JP)
(74) Representative: Maiwald GmbH
(86) International application number: PCT/JP2022/038973
(87) International publication number: WO 2023/074502

(57) **Abstract**

A slurry composition for a non-aqueous secondary battery functional layer contains a particulate polymer A including a reactive functional group-containing monomer unit and a particulate polymer B. The particulate polymer A has a glass-transition temperature of not lower than 30°C and not higher than 95°C, the particulate polymer B has a glass-transition temperature of lower than 30°C, and the particulate polymer A has a volume-average particle diameter of not less than 250 nm and not more than 800 nm.

## Description

### TECHNICAL FIELD

The present disclosure relates to a slurry composition for a non-aqueous secondary battery functional layer, a separator for a non-aqueous secondary battery, and a non-aqueous secondary battery.

### BACKGROUND

Non-aqueous secondary batteries (hereinafter, also referred to simply as "secondary batteries") such as lithium ion secondary batteries have characteristics such as compact size, light weight, high energy-density, and the ability to be repeatedly charged and discharged, and are used in a wide variety of applications.

A secondary battery typically includes electrodes (positive electrode and negative electrode) and a separator that isolates the positive electrode and the negative electrode from each other and prevents short-circuiting between the positive and negative electrodes. Conventionally, a separator in which a layer for imparting a specific function to a battery member, such as a porous membrane layer for improving heat resistance and strength or an adhesive layer for improving adhesiveness with an electrode (hereinafter, "functional layer" may be used as a general term for these layers), is provided on the surface of a separator substrate may be used as the separator. Moreover, such a functional layer may be formed by applying a slurry composition for a secondary battery functional layer containing components such as a binder onto a substrate such as a separator substrate and then drying a coating film on the substrate, for example.

As one example of a technique relating to functional layers, Patent Literature (PTL) 1 discloses a separator for an electrical storage device that includes a porous layer formed of an inorganic filler and a resin binder on a porous substrate layer. PTL 1 proposes using a mixture of a plurality of types of binders having different functional group equivalents and glass-transition temperatures as the resin binder in production of the separator for an electrical storage device.

### CITATION LIST

### Patent Literature

PTL 1: JP2016-072117A

### SUMMARY

### (Technical Problem)

However, there is room for further improvement in the conventional technique described above in terms of causing a functional layer to display excellent adhesiveness after immersion in electrolyte solution and sufficiently ensuring battery characteristics demanded of a secondary battery.

Accordingly, one object of the present disclosure is to provide a slurry composition for a non-aqueous secondary battery functional layer that is capable of forming a functional layer having excellent adhesiveness after immersion in electrolyte solution and that is capable of causing a secondary battery to display excellent battery characteristics.

Another object of the present disclosure is to provide a separator for a non-aqueous secondary battery that has good adhesiveness with an adjacent battery member after immersion in electrolyte solution and that is capable of causing a secondary battery to display excellent battery characteristics.

Yet another object of the present disclosure is to provide a non-aqueous secondary battery that has excellent battery characteristics.

### (Solution to Problem)

The inventor conducted diligent investigation with the aim of solving the problem set forth above. The inventor made a new discovery that by using a slurry composition containing two types of particulate polymers that are a particulate polymer A including a reactive functional group-containing monomer unit and having a glass-transition temperature of not lower than 30°C and not higher than 95°C and a volume-average particle diameter of not less than 250 nm and not more than 800 nm and a particulate polymer B having a glass-transition temperature of lower than 30°C, it is possible to form a functional layer that can display excellent adhesiveness after immersion in electrolyte solution, and it is possible to improve battery characteristics of a secondary battery when using this functional layer as a result of the functional layer having excellent ion conductivity of lithium ions or the like. In this manner, the inventor completed the present disclosure.

Specifically, the present disclosure aims to advantageously solve the problem set forth above, and [1] a presently disclosed slurry composition for a non-aqueous secondary battery functional layer comprises: a particulate polymer A including a reactive functional group-containing monomer unit; and a particulate polymer B, wherein the particulate polymer A has a glass-transition temperature of not lower than 30°C and not higher than 95°C, the particulate polymer B has a glass-transition temperature of lower than 30°C, and the particulate polymer A has a volume-average particle diameter of not less than 250 nm and not more than 800 nm.

By using a slurry composition that contains a particulate polymer A including a reactive functional group-containing monomer unit and having a glass-transition temperature of not lower than 30°C and not higher than 95°C and a volume-average particle diameter of not less than 250 nm and not more than 800 nm and a particulate polymer B having a glass-transition temperature of lower than 30°C in this manner, it is possible to form a functional layer having excellent adhesiveness after immersion in electrolyte solution and to cause a secondary battery to display excellent battery characteristics when using this functional layer.

Note that the term "particulate polymer" as used in the present disclosure refers to a polymer component that is dispersed in the presently disclosed slurry composition for a non-aqueous secondary battery functional layer in a state in which the polymer component maintains a particulate form. Also note that the particulate polymer may have a particulate form or may have any other form in a functional layer that is formed using the presently disclosed slurry composition for a non-aqueous secondary battery functional layer.

Moreover, a "monomer unit" of a polymer referred to in the present disclosure is a "repeating unit derived from the monomer that is included in a polymer obtained using the monomer". Furthermore, the proportional content of a monomer unit in a polymer can be measured by ¹H-NMR.

Also, the "glass-transition temperature" and "volume-average particle diameter" of a polymer referred to in the present disclosure can be measured by methods described in the EXAMPLES section of the present specification.

[2] In the slurry composition for a non-aqueous secondary battery functional layer according to the foregoing [1], proportional content of the reactive functional group-containing monomer unit in the particulate polymer A is preferably not less than 8 mass% and not more than 40 mass%. When the proportional content of the reactive functional group-containing monomer unit in the particulate polymer A is within the range set forth above, adhesiveness of a functional layer after immersion in electrolyte solution can be further improved.

[3] In the slurry composition for a non-aqueous secondary battery functional layer according to the foregoing [1] or [2], the particulate polymer A preferably has a degree of swelling in electrolyte solution of not less than a factor of 1.2 and not more than a factor of 3. When the degree of swelling in electrolyte solution of the particulate polymer A is within the range set forth above, cycle characteristics of a secondary battery can be improved.

The "degree of swelling in electrolyte solution" referred to in the present disclosure can be measured using a measurement method described in the EXAMPLES section of the present specification.

[4] In the slurry composition for a non-aqueous secondary battery functional layer according to any one of the foregoing [1] to [3], a mass ratio of the particulate polymer A and the particulate polymer B is preferably 100: 1 to 100:25. When the mass ratio of the particulate polymer A and the particulate polymer B is within the range set forth above, this enables a better balance of adhesiveness of a functional layer after immersion in electrolyte solution and cycle characteristics of a secondary battery.

Moreover, the present disclosure aims to advantageously solve the problem set forth above, and [5] a presently disclosed separator for a non-aqueous secondary battery comprises: a separator substrate; and a functional layer formed on at least one side of the separator substrate, wherein the functional layer is a dried product of the slurry composition for a non-aqueous secondary battery functional layer according to any one of the foregoing [1] to [4]. A separator that includes a functional layer formed from the slurry composition for a non-aqueous secondary battery functional layer according to any one of the foregoing [1] to [4] in this manner can adhere well to an adjacent battery member (for example, an electrode) after immersion in electrolyte solution. Therefore, a secondary battery can be caused to display excellent battery characteristics when using this separator.

Furthermore, the present disclosure aims to advantageously solve the problem set forth above, and [6] a presently disclosed non-aqueous secondary battery comprises a positive electrode, a negative electrode, a separator, and an electrolyte solution, wherein the separator is the separator for a non-aqueous secondary battery according to the foregoing [5]. A secondary battery that includes the separator for a non-aqueous secondary battery according to the foregoing [5] in this manner has excellent battery characteristics.

### (Advantageous Effect)

According to the present disclosure, it is possible to provide a slurry composition for a non-aqueous secondary battery functional layer that is capable of forming a functional layer having excellent adhesiveness after immersion in electrolyte solution and that is capable of causing a secondary battery to display excellent battery characteristics.

Moreover, according to the present disclosure, it is possible to provide a separator for a non-aqueous secondary battery that has good adhesiveness with an adjacent battery member after immersion in electrolyte solution and that is capable of causing a secondary battery to display excellent battery characteristics.

Furthermore, according to the present disclosure, it is possible to provide a non-aqueous secondary battery that has excellent battery characteristics.

### DETAILED DESCRIPTION

The following provides a detailed description of embodiments of the present disclosure.

The presently disclosed slurry composition for a non-aqueous secondary battery functional layer is used as a material in production of a functional layer that is included in a battery member such as a separator or an electrode. Moreover, the presently disclosed separator for a non-aqueous secondary battery includes a functional layer that is formed using the presently disclosed slurry composition for a non-aqueous secondary battery functional layer. Furthermore, the presently disclosed non-aqueous secondary battery includes the presently disclosed separator for a non-aqueous secondary battery.

### (Slurry composition for non-aqueous secondary battery functional layer)

The presently disclosed slurry composition for a non-aqueous secondary battery functional layer (hereinafter, also referred to simply as a "slurry composition") contains a particulate polymer A and a particulate polymer B, and may optionally further contain components other than the particulate polymer A and the particulate polymer B (hereinafter, referred to as "other components"). The presently disclosed slurry composition can also further contain a solvent such as water. Features of the presently disclosed slurry composition are that the particulate polymer A includes a reactive functional group-containing monomer unit and has a glass-transition temperature of not lower than 30°C and not higher than 95°C and a volume-average particle diameter of not less than 250 nm and not more than 800 nm, and that the particulate polymer B has a glass-transition temperature of lower than 30°C.

The particulate polymer A has high strength due to a cross-linked structure being formed in the particulate polymer A as a result of inclusion of the reactive functional group-containing monomer unit. Moreover, the inclusion of the reactive functional group-containing monomer unit in the particulate polymer A facilitates interactions between the surface of the particulate polymer A and the surface of a battery member. Furthermore, the particulate polymer A has excellent adhesiveness as a result of having the specific glass-transition temperature and volume-average particle diameter set forth above. The particulate polymer B also has excellent adhesiveness as a result of having a glass-transition temperature of lower than 30°C. Accordingly, a functional layer that is formed using a slurry composition containing both the particulate polymer A and the particulate polymer B can display excellent adhesiveness after immersion in electrolyte solution and also has excellent ion conductivity of lithium ions or the like due to a synergistic effect of the particulate polymer A and the particulate polymer B. Therefore, a secondary battery can be caused to display excellent battery characteristics when using a separator that includes a functional layer formed using the presently disclosed slurry composition.

### <Particulate polymer A>

### {Glass-transition temperature}

The glass-transition temperature of the particulate polymer A is 30°C or higher, and preferably 50°C or higher, and is 95°C or lower, and preferably 80°C or lower. When the glass-transition temperature of the particulate polymer A is not lower than any of the lower limits set forth above, it is possible to inhibit the sticking together of adjacent battery members via a functional layer, otherwise referred to as blocking, and to improve battery characteristics of a secondary battery. Moreover, when the glass-transition temperature of the particulate polymer A is not higher than any of the upper limits set forth above, adhesiveness of a functional layer after immersion in electrolyte solution can be improved, swelling of an electrode in accompaniment to repeated charging and discharging can be inhibited, and battery characteristics of a secondary battery can be improved.

Note that the glass-transition temperature of the particulate polymer A can be adjusted by, for example, altering the types and proportions of monomers used to produce the particulate polymer A and/or altering the polymerization conditions (for example, the used amount of an emulsifier) of the particulate polymer A.

### {Volume-average particle diameter}

The volume-average particle diameter of the particulate polymer A is 250 nm or more, preferably 300 nm or more, more preferably 400 nm or more, and even more preferably 500 nm or more, and is 800 nm or less, and preferably 600 nm or less. When the volume-average particle diameter of the particulate polymer A is not less than any of the lower limits set forth above, the thickness of a functional layer can be sufficiently ensured, and adhesiveness of the functional layer after immersion in electrolyte solution can be further improved. Moreover, when the volume-average particle diameter of the particulate polymer A is not more than any of the upper limits set forth above, contact area of a functional layer with a battery member can be sufficiently ensured, and adhesiveness of the functional layer can be further improved.

Note that the volume-average particle diameter of the particulate polymer A can be adjusted by, for example, altering the polymerization conditions (for example, the used amount of an emulsifier) of the particulate polymer A.

### {Degree of swelling in electrolyte solution}

The degree of swelling in electrolyte solution of the particulate polymer A is preferably a factor of 1.2 or more, and more preferably a factor of 1.5 or more, and is preferably a factor of 3 or less, and more preferably a factor of 2.5 or less. When the degree of swelling in electrolyte solution of the particulate polymer A is not less than any of the lower limits set forth above, adhesiveness of a functional layer after immersion in electrolyte solution can be further increased, and swelling of an electrode in accompaniment to repeated charging and discharging can be further inhibited. Moreover, when the degree of swelling in electrolyte solution of the particulate polymer A is not more than any of the upper limits set forth above, rate characteristics and cycle characteristics of a secondary battery can be further enhanced.

Note that the degree of swelling in electrolyte solution of the particulate polymer A can be adjusted by, for example, altering the types and proportions of monomers used to produce the particulate polymer A and/or altering the polymerization conditions (for example, the used amount of an emulsifier) of the particulate polymer A.

### {Chemical composition}

The particulate polymer A includes a reactive functional group-containing monomer unit and can optionally include monomer units other than the reactive functional group-containing monomer unit (hereinafter, referred to as "other monomer units"). Examples of other monomer units include, but are not specifically limited to, a (meth)acrylic acid ester monomer unit, an aromatic monovinyl monomer unit, a cross-linkable monomer unit, and an acidic group-containing monomer unit.

### -Reactive functional group-containing monomer unit-

The reactive functional group-containing monomer unit referred to in the present disclosure is inclusive of a cyclic ether-containing monomer unit and/or a silane monomer unit.

No specific limitations are placed on cyclic ether-containing monomers that can form a cyclic ether-containing monomer unit so long as they are monomers that include a cyclic ether structure, and examples thereof include epoxy group (epoxy ring) containing monomers and oxetanyl group (oxetane ring) containing monomers.

Examples of epoxy group-containing monomers include allyl glycidyl ether, glycidyl (meth)acrylate, 3,4-epoxycyclohexylmethyl methacrylate, 4-hydroxybutyl acrylate glycidyl ether, and glycidyl vinyl ether. One of these epoxy group-containing monomers may be used individually, or a plurality of these epoxy group-containing monomers may be used in combination.

Note that in the present disclosure, "(meth)acrylate" is used to indicate "acrylate" and/or "methacrylate".

Examples of oxetanyl group-containing monomers include 3-((meth)acryloyloxymethyl)oxetane, 3-((meth)acryloyloxymethyl)-2-trifluoromethyl oxetane, 3-((meth)acryloyloxymethyl)-2-phenyl oxetane, 2-((meth)acryloyloxymethyl)oxetane, and 2-((meth)acryloyloxymethyl)-4-trifluoromethyloxetane. One of these oxetanyl group-containing monomers may be used individually, or a plurality of these oxetanyl group-containing monomers may be used in combination.

Note that in the present disclosure, "(meth)acryloyl" is used to indicate "acryloyl" and/or "methacryloyl".

No specific limitations are placed on silane monomers that can form a silane monomer unit so long as they are monomers that include a silane, and examples thereof include vinyl group-containing monomers such as vinyltrimethoxysilane and vinyltriethoxysilane; methacryl group-containing monomers such as methacryloxypropylmethyldimethoxysilane, methacryloxypropyltrimethoxysilane, methacryloxypropylmethyldiethoxy silane, and methacryloxypropyltriethoxysilane; and acryl group-containing monomers such as acryloxypropyltrimethoxysilane. One of these silane monomers may be used individually, or a plurality of these silane monomers may be used in combination.

From a viewpoint of further improving adhesiveness of a functional layer, epoxy group-containing monomers and methacryl group-containing monomers are preferable as monomers forming reactive functional group-containing monomer units, with glycidyl methacrylate, glycidyl vinyl ether, and methacryloxypropyltrimethoxysilane being preferable.

The proportional content of reactive functional group-containing monomer units in the particulate polymer A when the amount of all monomer units in the particulate polymer A is taken to be 100 mass% is preferably 8 mass% or more, and more preferably 10 mass% or more, and is preferably 40 mass% or less, and more preferably 30 mass% or less. When the proportional content of reactive functional group-containing monomer units is within any of the ranges set forth above, swelling of a secondary battery in accompaniment to repeated charging and discharging can be further inhibited.

### -(Meth)acrylic acid ester monomer unit-

Examples of (meth)acrylic acid ester monomers that can form a (meth)acrylic acid ester monomer unit include acrylic acid alkyl esters such as methyl acrylate, ethyl acrylate, n-propyl acrylate, isopropyl acrylate, n-butyl acrylate, t-butyl acrylate, isobutyl acrylate, n-pentyl acrylate, isopentyl acrylate, hexyl acrylate, heptyl acrylate, octyl acrylate, 2-ethylhexyl acrylate, nonyl acrylate, decyl acrylate, lauryl acrylate, n-tetradecyl acrylate, and stearyl acrylate; and methacrylic acid alkyl esters such as methyl methacrylate, ethyl methacrylate, n-propyl methacrylate, isopropyl methacrylate, n-butyl methacrylate, t-butyl methacrylate, isobutyl methacrylate, n-pentyl methacrylate, isopentyl methacrylate, hexyl methacrylate, heptyl methacrylate, octyl methacrylate, 2-ethylhexyl methacrylate, nonyl methacrylate, decyl methacrylate, lauryl methacrylate, n-tetradecyl methacrylate, stearyl methacrylate, and glycidyl methacrylate. One of these (meth)acrylic acid ester monomers may be used individually, or a plurality of these (meth)acrylic acid ester monomers may be used in combination. Of these (meth)acrylic acid ester monomers, n-butyl acrylate and 2-ethylhexyl acrylate are preferable.

The proportional content of (meth)acrylic acid ester monomer units in the particulate polymer A when the amount of all monomer units in the particulate polymer A is taken to be 100 mass% is preferably 10 mass% or more, and more preferably 20 mass% or more, and is preferably 50 mass% or less, and more preferably 40 mass% or less. When the proportional content of (meth)acrylic acid ester monomer units is within any of the ranges set forth above, flexibility of the particulate polymer A can be ensured while also enabling good control of the degree of swelling in electrolyte solution of the particulate polymer A. This makes it possible to further improve adhesiveness of a functional layer after immersion in electrolyte solution and rate characteristics and cycle characteristics of a secondary battery.

### -Aromatic monovinyl monomer unit-

Examples of aromatic monovinyl monomers that can form an aromatic monovinyl monomer unit include styrene, styrene sulfonic acid and salts thereof (for example, sodium styrenesulfonate), α-methylstyrene, vinyltoluene, and 4-(tert-butoxy)styrene. One of these aromatic monovinyl monomers may be used individually, or a plurality of these aromatic monovinyl monomers may be used in combination. Of these aromatic monovinyl monomers, styrene is preferable.

The proportional content of aromatic monovinyl monomer units in the particulate polymer A when the amount of all monomer units in the particulate polymer A is taken to be 100 mass% is preferably 30 mass% or more, and more preferably 40 mass% or more, and is preferably 80 mass% or less, and more preferably 70 mass% or less. When the proportional content of aromatic monovinyl monomer units is not less than any of the lower limits set forth above, the particulate polymer A has a higher glass-transition temperature, and blocking resistance of a secondary battery can be improved. Moreover, when the proportional content of aromatic monovinyl monomer units is not more than any of the upper limits set forth above, deformability of the particulate polymer A during pressing or the like in production of a secondary battery is sufficiently ensured, which enables further improvement of adhesiveness of a functional layer after immersion in electrolyte solution.

### -Cross-linkable monomer unit-

No specific limitations are placed on cross-linkable monomers that can form a cross-linkable monomer unit, and monomers that can form a cross-linked structure through polymerization may be used. Typical examples of cross-linkable monomers include monomers that are thermally cross-linkable. Moreover, a cross-linkable monomer that includes two or more olefinic double bonds per molecule, for example, may be used as a cross-linkable monomer.

Note that in the case of a monomer that can be categorized as both a reactive functional group-containing monomer such as previously described and a cross-linkable monomer, this monomer is treated as a reactive functional group-containing monomer in the present disclosure.

Examples of cross-linkable monomers including two or more olefinic double bonds per molecule include allyl (meth)acrylate (also referred to as "allyl methacrylate"), ethylene glycol di(meth)acrylate (also referred to as "ethylene glycol dimethacrylate"), diethylene glycol di(meth)acrylate, triethylene glycol di(meth)acrylate, tetraethylene glycol di(meth)acrylate, trimethylolpropane tri(meth)acrylate, dipropylene glycol diallyl ether, polyglycol diallyl ether, triethylene glycol divinyl ether, hydroquinone diallyl ether, tetraallyloxyethane, trimethylolpropane diallyl ether, allyl and vinyl ethers of polyfunctional alcohols other than those already described, triallylamine, methylenebisacrylamide, and divinylbenzene.

One cross-linkable monomer may be used individually, or a plurality of cross-linkable monomers may be used in combination. Of these cross-linkable monomers, cross-linkable monomers including two or more olefinic double bonds per molecule are preferable, with allyl methacrylate and ethylene glycol dimethacrylate being preferable.

The proportion constituted by cross-linkable monomer units in the particulate polymer A when the amount of all monomer units in the particulate polymer A is taken to be 100 mass% is preferably not less than 0.1 mass% and not more than 1 mass%. When the proportional content of cross-linkable monomer units is within the range set forth above, this enables good control of the degree of swelling in electrolyte solution of the particulate polymer A and can also further improve adhesiveness of a functional layer after immersion in electrolyte solution and rate characteristics and cycle characteristics of a secondary battery.

### -Acidic group-containing monomer unit-

Examples of acidic group-containing monomers that can form an acidic group-containing monomer unit include carboxy group-containing monomers, sulfo group-containing monomers, and phosphate group-containing monomers. One of these acidic group-containing monomers may be used individually, or a plurality of these acidic group-containing monomers may be used in combination.

Examples of carboxy group-containing monomers include ethylenically unsaturated monocarboxylic acids, derivatives of ethylenically unsaturated monocarboxylic acids, ethylenically unsaturated dicarboxylic acids, acid anhydrides of ethylenically unsaturated dicarboxylic acids, and derivatives of these ethylenically unsaturated dicarboxylic acids and acid anhydrides.

Examples of ethylenically unsaturated monocarboxylic acids include acrylic acid, methacrylic acid, and crotonic acid. Examples of derivatives of ethylenically unsaturated monocarboxylic acids include 2-ethylacrylic acid, isocrotonic acid, α-acetoxyacrylic acid, β-trans-aryloxyacrylic acid, α-chloro-β-E-methoxyacrylic acid, and β-diaminoacrylic acid.

Examples of ethylenically unsaturated dicarboxylic acids include maleic acid, fumaric acid, itaconic acid, and mesaconic acid. Examples of acid anhydrides of ethylenically unsaturated dicarboxylic acids include maleic anhydride, acrylic anhydride, methylmaleic anhydride, and dimethylmaleic anhydride. Examples of derivatives of ethylenically unsaturated dicarboxylic acids include methylmaleic acid, dimethylmaleic acid, phenylmaleic acid, chloromaleic acid, dichloromaleic acid, fluoromaleic acid, diphenyl maleate, nonyl maleate, decyl maleate, dodecyl maleate, octadecyl maleate, and fluoroalkyl maleates.

Examples of sulfo group-containing monomers include vinyl sulfonic acid, methyl vinyl sulfonic acid, (meth)allyl sulfonic acid, (meth)acrylic acid 2-sulfoethyl, 2-acrylamido-2-methylpropane sulfonic acid, and 3-allyloxy-2-hydroxypropane sulfonic acid.

Note that in the present disclosure, "(meth)allyl" is used to indicate "allyl" and/or "methallyl", and "(meth)acryl" is used to indicate "acryl" and/or "methacryl".

Examples of phosphate group-containing monomers include 2-(meth)acryloyloxy ethyl phosphate, methyl-2-(meth)acryloyloxy ethyl phosphate, and ethyl-(meth)acryloyloxyethyl phosphate.

Of these examples, carboxy group-containing monomers are preferable, and acrylic acid, methacrylic acid, and itaconic acid are more preferable as acidic group-containing monomers.

The proportion constituted by acidic group-containing monomer units in the particulate polymer A when the amount of all monomer units in the particulate polymer A is taken to be 100 mass% is preferably 5 mass% or less, and more preferably 2 mass% or less.

### {Production method of particulate polymer A}

The particulate polymer A described above can be produced by a known polymerization method without any specific limitations. The mode of polymerization is not specifically limited and may, for example, be any of solution polymerization, suspension polymerization, bulk polymerization, and emulsion polymerization. The polymerization method may, for example, be ionic polymerization, radical polymerization, living radical polymerization, or the like. An emulsifier, dispersant, polymerization initiator, polymerization aid, or the like used in polymerization may be the same as typically used and the amount thereof may also be the same as typically used.

### <Particulate polymer B>

### {Glass-transition temperature}

The glass-transition temperature of the particulate polymer B is lower than 30°C, preferably 20°C or lower, and more preferably 0°C or lower, and is preferably -50°C or higher, more preferably -40°C or higher, and even more preferably -30°C or higher. When the glass-transition temperature of the particulate polymer B is within any of the ranges set forth above, adhesiveness of a functional layer can be sufficiently ensured.

Note that the glass-transition temperature of the particulate polymer B can be adjusted in the same manner as for the particulate polymer A.

### {Chemical composition}

No specific limitations are placed on the chemical composition of the particulate polymer B so long as the glass-transition temperature thereof is lower than 30°C. The particulate polymer B can, for example, include a (meth)acrylic acid ester monomer unit, an aromatic monovinyl monomer unit, a cross-linkable monomer unit, and/or an acidic group-containing monomer unit such as previously described, and can also include an aliphatic conjugated diene monomer unit, a cyano group-containing monomer unit, and/or the like, for example. Of these monomer units, it is preferable that the particulate polymer B includes an aromatic monovinyl monomer unit, a cross-linkable monomer unit, an acidic group-containing monomer unit, and an aliphatic conjugated diene monomer unit from a viewpoint of causing a functional layer that has been immersed in electrolyte solution to display excellent adhesiveness.

### -(Meth)acrylic acid ester monomer unit-

Examples of (meth)acrylic acid ester monomers that can form a (meth)acrylic acid ester monomer unit that can be included in the particulate polymer B include the same (meth)acrylic acid ester monomers as previously described in the "Particulate polymer A" section.

From a viewpoint of further improving adhesiveness of a functional layer after immersion in electrolyte solution, the proportional content of (meth)acrylic acid ester monomer units in the particulate polymer B when all monomer units in the particulate polymer B are taken to be 100 mass% is preferably not less than 60 mass% and not more than 95 mass%.

### -Aromatic monovinyl monomer unit-

Examples of aromatic monovinyl monomers that can form an aromatic monovinyl monomer unit that can be included in the particulate polymer B include the same aromatic monovinyl monomers as previously described in the "Particulate polymer A" section.

From a viewpoint of further improving adhesiveness of a functional layer after immersion in electrolyte solution, the proportional content of aromatic monovinyl monomer units in the particulate polymer B when all monomer units in the particulate polymer B are taken to be 100 mass% is preferably 10 mass% or more, and more preferably 20 mass% or more, and is preferably 70 mass% or less.

### -Cross-linkable monomer unit-

Examples of cross-linkable monomers that can form a cross-linkable monomer unit that can be included in the particulate polymer B include the same cross-linkable monomers as previously described in the "Particulate polymer A" section.

From a viewpoint of further improving adhesiveness of a functional layer after immersion in electrolyte solution, the proportional content of cross-linkable monomer units in the particulate polymer B when all monomer units in the particulate polymer B are taken to be 100 mass% is preferably not less than 0.1 mass% and not more than 1 mass%.

### -Acidic group-containing monomer unit-

Examples of acidic group-containing monomers that can form an acidic group-containing monomer unit that can be included in the particulate polymer B include the same acidic group-containing monomers as previously described in the "Particulate polymer A" section.

From a viewpoint of further improving adhesiveness of a functional layer after immersion in electrolyte solution, the proportional content of acidic group-containing monomer units in the particulate polymer B when all monomer units in the particulate polymer B are taken to be 100 mass% is preferably not less than 1 mass% and not more than 5 mass%.

### -Aliphatic conjugated diene monomer unit-

Examples of aliphatic conjugated diene monomers that can form an aliphatic conjugated diene monomer unit include conjugated diene compounds having a carbon number of 4 or more such as 1,3-butadiene, isoprene, 2,3-dimethyl-1,3-butadiene, and 1,3-pentadiene. Of these aliphatic conjugated diene monomers, 1,3-butadiene and isoprene are preferable, and 1,3-butadiene is more preferable. One of these aliphatic conjugated diene monomers may be used individually, or two or more of these aliphatic conjugated diene monomers may be used in combination.

From a viewpoint of further improving adhesiveness of a functional layer after immersion in electrolyte solution, the proportional content of aliphatic conjugated diene monomer units in the particulate polymer B when the amount of all monomer units in the particulate polymer B is taken to be 100 mass% is preferably not less than 10 mass% and not more than 60 mass%.

### -Cyano group-containing monomer unit-

Examples of cyano group-containing monomers that can form a cyano group-containing monomer unit include (meth)acrylonitrile such as acrylonitrile and methacrylonitrile; α-halogenoacrylonitriles such as α-chloroacrylonitrile and α-bromoacrylonitrile; 2-cyanoethyl (meth)acrylate such as 2-cyanoethyl acrylate and 2-cyanoethyl methacrylate; and 2-cyanoethylacrylamide. From a viewpoint of further improving adhesiveness of a functional layer after immersion in electrolyte solution, it is preferable to use (meth)acrylonitrile, and more preferable to use acrylonitrile. Note that one of these cyano group-containing monomers may be used individually, or two or more of these cyano group-containing monomers may be used in combination in a freely selected ratio.

Also note that in the present disclosure, "(meth)acrylonitrile" is used to indicate "acrylonitrile" and/or "methacrylonitrile", and "(meth)acrylate" is used to indicate "acrylate" and/or "methacrylate".

From a viewpoint of further improving adhesiveness of a functional layer after immersion in electrolyte solution, the proportional content of cyano group-containing monomer units in the particulate polymer B when the amount of all monomer units in the particulate polymer B is taken to be 100 mass% is preferably not less than 1 mass% and not more than 20 mass%.

### {Production method of particulate polymer B}

No specific limitations are placed on the production method of the particulate polymer B, and the particulate polymer B can be produced by any of the same methods as for the particulate polymer A.

### <Mass ratio of particulate polymer A and particulate polymer B>

A mass ratio of the particulate polymer A and the particulate polymer B (particulate polymer A:particulate polymer B) in the presently disclosed slurry composition is preferably 100:1 to 100:25. When the mass ratio of the particulate polymer A and the particulate polymer B is within the range set forth above, this enables a better balance of adhesiveness of a functional layer after immersion in electrolyte solution and cycle characteristics of a secondary battery.

### <Other components>

Examples of other components that can optionally be contained in the presently disclosed slurry composition include known additives without any specific limitations. Components such as surface tension modifiers, dispersants, viscosity modifiers, reinforcing materials, and additives for electrolyte solution may be contained as known additives without any specific limitations. These other components are not specifically limited so long as they do not affect battery reactions and can be selected from commonly known components such as those described in WO2012/115096A1. One of these components may be used individually, or two or more of these components may be used in combination in a freely selected ratio.

### <Production method of slurry composition>

No specific limitations are placed on the method by which the presently disclosed slurry composition is produced. For example, the presently disclosed slurry composition can be produced by mixing the above-described particulate polymers A and B, a solvent, and other components that are used as necessary. No specific limitations are placed on the method of mixing, and the mixing can be performed by a commonly known method.

### <Separator for non-aqueous secondary battery>

The presently disclosed separator for a non-aqueous secondary battery (hereinafter, also referred to simply as a "separator") includes a separator substrate and a functional layer formed on at least one side of the separator substrate, wherein the functional layer is a dried product of the presently disclosed slurry composition set forth above. In the case of the presently disclosed separator, the functional layer can closely adhere strongly to the separator substrate as a result of the functional layer being formed from the presently disclosed slurry composition. Moreover, the presently disclosed separator makes it possible to cause a secondary battery to display excellent battery characteristics.

### <Separator substrate>

The separator substrate that is used in the presently disclosed separator is not specifically limited and may be a known separator substrate such as an organic separator substrate. The organic separator substrate is a porous member that is formed of an organic material. The organic separator substrate may, for example, be a microporous membrane or non-woven fabric containing a polyolefin resin such as polyethylene or polypropylene, an aromatic polyamide resin, or the like, and is preferably a microporous membrane or non-woven fabric made of polyethylene due to the excellent strength thereof.

### <Functional layer>

The functional layer is a dried product of the presently disclosed slurry composition as previously described. In other words, the functional layer that is included in the presently disclosed separator normally contains at least the particulate polymer A and the particulate polymer B, and optionally contains other components. Note that components contained in the functional layer are components that were contained in the presently disclosed slurry composition and thus the preferred ratio of these components is the same as the preferred ratio of the components in the presently disclosed slurry composition. Moreover, in a case in which the particulate polymer A and/or the particulate polymer B includes a cross-linkable monomer unit, the particulate polymer A and/or the particulate polymer B may be cross-linked during drying of the slurry composition or during heat treatment or the like that is optionally performed after drying (i.e., the functional layer may contain a cross-linked product of the above-described particulate polymer A and/or B).

Furthermore, although the functional layer that is a dried product of the slurry composition may contain a solvent such as water originating from the slurry composition, the solvent content in the functional layer is preferably 3 mass% or less, more preferably 1 mass% or less, even more preferably 0.1 mass% or less, and particularly preferably 0 mass% (below the limit of detection) from a viewpoint of ensuring battery characteristics (rate characteristics, etc.) of a secondary battery.

### <Production method of separator>

No specific limitations are placed on the method by which the presently disclosed separator is produced. For example, the presently disclosed separator can be produced by forming a functional layer on the above-described separator substrate.

Examples of methods by which a functional layer may be formed on the separator substrate to produce the presently disclosed separator include:
(1) a method in which the presently disclosed slurry composition is supplied onto the surface of the separator substrate and is then dried; and
(2) a method in which the presently disclosed slurry composition is supplied onto a releasable substrate and is dried to produce a functional layer that is then transferred onto the surface of the separator substrate.

Of these methods, method (1) is particularly preferable since it allows simple control of the thickness of the functional layer. In more detail, method (1) includes a step of supplying the slurry composition onto the separator substrate (supply step) and a step of drying the slurry composition that has been supplied onto the separator substrate to form a functional layer (drying step).

### «Supply step»

The method by which the slurry composition is supplied onto the separator substrate in the supply step may be a method in which the slurry composition is applied onto the surface of the separator substrate or a method in which the separator substrate is immersed in the slurry composition. Specific examples of these methods include, but are not specifically limited to, doctor blading, reverse roll coating, direct roll coating, gravure coating, extrusion coating, brush coating, dip coating, spray coating, and vacuum impregnation.

### <<Drying step»

Any commonly known method can be used without any specific limitations as the method by which the slurry composition on the separator substrate is dried in the drying step. Examples of drying methods that may be used include drying by warm, hot, or low-humidity air, drying in a vacuum, and drying through irradiation with infrared light, electron beams, or the like.

Note that the thickness of the functional layer produced on the separator substrate in this manner is preferably not less than 0.1 µm and not more than 10 µm from a viewpoint of ensuring strength of the functional layer while also further improving rate characteristics of a secondary battery.

### (Non-aqueous secondary battery)

The presently disclosed secondary battery includes the presently disclosed separator set forth above. More specifically, the presently disclosed non-aqueous secondary battery includes a positive electrode, a negative electrode, a separator, and an electrolyte solution, wherein the separator is the presently disclosed separator for a non-aqueous secondary battery set forth above. The presently disclosed secondary battery can display excellent battery characteristics as a result of including the presently disclosed separator.

### <Positive electrode and negative electrode>

Known positive electrodes and negative electrodes can be used without any specific limitations as the positive electrode and the negative electrode that are used in the presently disclosed secondary battery.

### <Electrolyte solution>

The electrolyte solution is normally an organic electrolyte solution obtained by dissolving a supporting electrolyte in an organic solvent. The supporting electrolyte may, for example, be a lithium salt in the case of a lithium ion secondary battery. Examples of lithium salts that can be used include LiPF₆, LiAsF₆, LiBF₄, LiSbF₆, LiAlCl₄, LiClO₄, CF₃SO₃Li, C₄F₉SO₃Li, CF₃COOLi, (CF₃CO)₂NLi, (CF₃SO₂)₂NLi, and (C₂F₅SO₂)NLi. Of these lithium salts, LiPF₆, LiClO₄, and CF₃SO₃Li are preferable as they readily dissolve in solvents and exhibit a high degree of dissociation. One electrolyte may be used individually, or two or more electrolytes may be used in combination. In general, lithium ion conductivity tends to increase when a supporting electrolyte having a high degree of dissociation is used. Therefore, lithium ion conductivity can be adjusted through the type of supporting electrolyte that is used.

The organic solvent used in the electrolyte solution is not specifically limited so long as the supporting electrolyte can dissolve therein. Examples of organic solvents that can suitably be used in a lithium ion secondary battery, for example, include carbonates such as dimethyl carbonate (DMC), ethylene carbonate (EC), diethyl carbonate (DEC), propylene carbonate (PC), butylene carbonate (BC), ethyl methyl carbonate (EMC), and vinylene carbonate (VC); esters such as γ-butyrolactone and methyl formate; ethers such as 1,2-dimethoxyethane and tetrahydrofuran; and sulfur-containing compounds such as sulfolane and dimethyl sulfoxide. Furthermore, a mixture of such solvents may be used. Of these solvents, carbonates are preferable due to having high permittivity and a wide stable potential region. In general, lithium ion conductivity tends to increase when a solvent having a low viscosity is used. Therefore, lithium ion conductivity can be adjusted through the type of solvent that is used.

The concentration of the electrolyte in the electrolyte solution can be adjusted as appropriate. Furthermore, known additives may be added to the electrolyte solution.

### <Production method of non-aqueous secondary battery>

The presently disclosed secondary battery set forth above can be produced by, for example, stacking the positive electrode and the negative electrode with the separator in-between, performing rolling, folding, or the like of the resultant laminate, as necessary, to place the laminate in a battery container, injecting the electrolyte solution into the battery container, and sealing the battery container. Note that at least one member among the positive electrode, the negative electrode, and the separator is a battery member that includes the presently disclosed functional layer. In order to prevent pressure increase inside the battery and occurrence of overcharging or overdischarging, an expanded metal; an overcurrent preventing device such as a fuse or a PTC device; or a lead plate may be provided in the battery container as necessary. The shape of the battery may be a coin type, button type, sheet type, cylinder type, prismatic type, flat type, or the like, for example.

### EXAMPLES

The following provides a more specific description of the present disclosure based on examples. However, the present disclosure is not limited to the following examples. In the following description, "%" and "parts" used in expressing quantities are by mass, unless otherwise specified.

Moreover, in the case of a polymer that is produced through copolymerization of a plurality of types of monomers, the proportion constituted in the polymer by a structural unit formed through polymerization of a given monomer is normally, unless otherwise specified, the same as the ratio (charging ratio) of the given monomer among all monomers used in polymerization for forming the polymer.

In the examples and comparative examples, the following methods were used to measure and evaluate glass-transition temperature, volume-average particle diameter, degree of swelling in electrolyte solution, adhesiveness of a functional layer after immersion in electrolyte solution, blocking resistance, swelling resistance, rate characteristics, and cycle characteristics.

### <Glass-transition temperature>

A water dispersion of a particulate polymer A produced in each example or comparative example was dried at a temperature of 25°C for 48 hours to obtain a powdered measurement sample.

The measurement sample was weighed into an aluminum pan in an amount of 10 mg and was then measured by a differential scanning calorimeter (produced by SII NanoTechnology Inc.; product name: EXSTAR DSC6220) under conditions prescribed in JIS Z8703 with a measurement temperature range of -100°C to 200°C and a heating rate of 20°C/min to obtain a differential scanning calorimetry (DSC) curve. Note that an empty aluminum pan was used as a reference. A temperature at which a derivative signal (DDSC) exhibited a peak in the heating process was determined as the glass-transition temperature (°C). Note that in a case in which multiple peaks were measured, the temperature at which a peak of large displacement was exhibited was taken to be the glass-transition temperature of the particulate polymer A.

Moreover, the glass-transition temperature of a particulate polymer B was determined by performing the same operations as described above with the exception that a water dispersion of a particulate polymer B produced in each example or comparative example was used instead of a water dispersion of a particulate polymer A.

### <Volume-average particle diameter>

The volume-average particle diameter of a particulate polymer A produced in each example or comparative example was measured by laser diffraction. Specifically, a water dispersion of the particulate polymer A that was adjusted to a solid content concentration of 0.1 mass% was used as a sample. In a particle diameter distribution (by volume) measured using a laser diffraction particle size analyzer (produced by Beckman Coulter, Inc.; product name: LS-13 320), the particle diameter (D50) at which cumulative volume calculated from a small diameter end of the distribution reached 50% was taken to be the volume-average particle diameter of the particulate polymer A.

### <Degree of swelling in electrolyte solution>

A water dispersion of a particulate polymer A produced in each example or comparative example was loaded into a petri dish made of polytetrafluoroethylene. The water dispersion in the petri dish was dried at a temperature of 25°C for 48 hours to obtain a powdered sample. A test specimen was obtained by pressing 0.2 g of the obtained sample for 2 minutes at a temperature of 200°C and a pressure of 5 MPa. The weight of the obtained test specimen was measured and was taken to be WO.

Next, the obtained test specimen was immersed in electrolyte solution for measurement having a temperature of 60°C for 72 hours. Note that a solution obtained by dissolving LiPF₆ (supporting electrolyte) with a concentration of 1 mol/L in a mixed solvent of ethylene carbonate (EC), ethyl methyl carbonate (EMC), and vinylene carbonate (VC) (volume ratio: EC/EMC/VC = 68/30/2) was used as the electrolyte solution for measurement.

After this immersion, the test specimen was removed from the electrolyte solution for measurement, and electrolyte solution for measurement on the surface of the test specimen was wiped off. The weight of the test specimen after immersion was measured and was taken to be W1. The measured weights WO and W1 were used to calculate the degree of swelling in electrolyte solution (= W1/WO).

### <Adhesiveness of functional layer after immersion in electrolyte solution>

A separator (thickness: 12 µm) made of a single layer of polyethylene produced by a wet method was prepared as a separator substrate. A slurry composition produced in each example or comparative example was applied onto one side of the separator substrate, and the slurry composition on the separator substrate was dried at 50°C for 10 minutes to form a functional layer (coating weight: 0.2 g/m²). This separator including a functional layer at one side was taken to be a separator for evaluation.

Moreover, a negative electrode was produced in the same way as in Example 1 described further below and was taken to be a negative electrode for evaluation.

The negative electrode for evaluation and separator for evaluation obtained as described above were each cut out as a 10 mm × 100 mm rectangular shape. The negative electrode mixed material layer of the negative electrode was arranged along the functional layer surface of the separator to obtain a test specimen, and this test specimen was placed inside of laminate packing together with approximately 400 µL of electrolyte solution. Once 12 hours had passed, the test specimen, together with the laminate packing, was pressed at 80°C with a pressure of 1.0 MPa for 10 minutes. Note that a solution having the same chemical composition as the electrolyte solution for measurement used in measurement of "degree of swelling in electrolyte solution" was used as the electrolyte solution.

The test specimen was subsequently removed from the laminate packing, and electrolyte solution attached to the surface thereof was wiped off. Next, the test specimen was placed with the surface at the current collector-side of the negative electrode facing downward, and cellophane tape was attached to the surface at the current collector-side of the negative electrode. Tape prescribed by JIS Z1522 was used as the cellophane tape. The cellophane tape had been affixed to a horizontal test stage beforehand. The stress when the separator was peeled off by pulling one end of the separator vertically upward at a pulling speed of 50 mm/min was measured. Three measurements were made in this manner. An average value for the stress was determined as the peel strength and was evaluated by the following standard. A larger peel strength indicates that the functional layer has better adhesiveness after immersion in electrolyte solution and that a separator and an electrode (negative electrode) can strongly adhere via the functional layer in electrolyte solution.
A: Peel strength of 6.0 N/m or more
B: Peel strength of not less than 2.0 N/m and less than 6.0 N/m
C: Peel strength of less than 2.0 N/m

### <Blocking resistance>

A separator that was the same as the separator including a functional layer at one side formed in evaluation of "adhesiveness of functional layer after immersion in electrolyte solution" was cut to a square shape of 5 cm in width by 5 cm in length to obtain two square pieces. Next, the two square pieces were stacked such that the surfaces of the respective functional layers formed on the respective separator substrates faced each other and were then placed under 0.1 MPa of pressure at a temperature of 40°C and left for 24 hours to produce a test specimen in a pressed state (pressed test specimen). The state of adhesion of the two stacked square pieces in the pressed test specimen that had been left for 24 hours was visually checked, and blocking resistance was evaluated according to the following standard. Note that in a case in which the two stacked square pieces were adhered, the entirety of one of the two square pieces was fixed in place, and the other of the two square pieces was pulled with a force of 0.3 N/m to confirm whether the square pieces could be peeled apart. Lack of adhesion between the two stacked square pieces indicates that the separator including the functional layer has better blocking resistance.
A: Two square pieces are not adhered
B: Two square pieces are adhered but can be peeled apart by pulling
C: Two square pieces are adhered and cannot be peeled apart by pulling

### <Swelling resistance>

A secondary battery produced in each example or comparative example was left at rest in a 25°C environment for 24 hours after injection of electrolyte solution. The thickness of the battery at this time was measured using a caliper. Thereafter, the secondary battery was subjected to a charge/discharge operation of charging to 4.2 V by a constant-current constant-voltage (CC-CV) method with a charge rate of 1C (cut-off condition: 0.02C) and discharging to 3.0 V by a constant-current (CC) method with a discharge rate of 1C at 25°C. The secondary battery was also repeatedly subjected to the same charge/discharge operation in a 45°C environment, and the thickness of the battery after 300 cycles was measured using a caliper. The proportional increase of the thickness of the secondary battery after cycling relative to that before cycling was evaluated as the swelling tendency of the secondary battery. A smaller proportional increase of the thickness of the secondary battery after cycling relative to that before cycling indicates that swelling of the secondary battery in accompaniment to repeated charging and discharging is inhibited and that the secondary battery has excellent swelling resistance.
A: Proportional increase of battery thickness after cycling relative to before cycling of less than 1%
B: Proportional increase of battery thickness after cycling relative to before cycling of not less than 1% and less than 5%
C: Proportional increase of battery thickness after cycling relative to before cycling of 5% or more

### <Rate characteristics>

A secondary battery produced in each example or comparative example was left at rest at a temperature of 25°C for 5 hours after injection of electrolyte solution. Next, the secondary battery was charged to a cell voltage of 3.65 V by a 0.2C constant-current method at a temperature of 25°C and was then subjected to 12 hours of aging at a temperature of 60°C. The secondary battery was subsequently discharged to a cell voltage of 3.00 V by a 0.2C constant-current method at a temperature of 25°C. Thereafter, CC-CV charging of the secondary battery was performed with a 0.2C constant current (upper limit cell voltage: 4.35V) and CC discharging of the secondary battery was performed to a cell voltage of 3.00 V with a 0.2C constant current. This charging and discharging at 0.2C was repeated three times.

Next, the secondary battery was subjected to 0.2C constant-current charging and discharging between cell voltages of 4.2 V and 3.00 V in an environment having a temperature of 25°C, and the discharge capacity at this time was defined as C0. Thereafter, the secondary battery was CC-CV charged with a 0.2C constant current in the same manner, was then discharged to 3.0 V with a 0.5C constant current in an environment having a temperature of -10°C, and the discharge capacity at this time was defined as C1. A capacity maintenance rate expressed by ΔC = (C1/C0) × 100(%) was determined as a rate characteristic and was evaluated by the following standard. A larger value for this capacity maintenance rate ΔC indicates that the secondary battery has higher discharge capacity at high current in a low temperature environment and also has lower internal resistance and better rate characteristics.
A: Capacity maintenance rate ΔC of 75% or more
B: Capacity maintenance rate ΔC of not less than 60% and less than 75%
C: Capacity maintenance rate ΔC of less than 60%

### <Cycle characteristics>

A lithium ion secondary battery was left at rest in a 25°C environment for 24 hours after injection of electrolyte solution. Thereafter, the lithium ion secondary battery was subjected to a charge/discharge operation of charging to 4.2 V by a constant-current constant-voltage (CC-CV) method with a charge rate of 1C (cut-off condition: 0.02C) and discharging to 3.0 V by a constant-current (CC) method with a discharge rate of 1C at 25°C, and the initial capacity C2 was measured.

The lithium ion secondary battery was also repeatedly subjected to the same charge/discharge operation in a 45°C environment, and the capacity C3 after 300 cycles was measured. A capacity maintenance rate ΔC' was calculated (ΔC' = (C3/C2) × 100(%)) and was evaluated by the following standard. A higher value for the capacity maintenance rate indicates that the secondary battery has less reduction of discharge capacity and better cycle characteristics.
A: Capacity maintenance rate ΔC' of 85% or more
B: Capacity maintenance rate ΔC' of not less than 75% and less than 85%
C: Capacity maintenance rate ΔC' of not less than 65% and less than 75%
D: Capacity maintenance rate ΔC' of less than 65%

### (Example 1)

### <Production of particulate polymer A>

A 5 MPa pressure-resistant vessel equipped with a stirrer was charged with 65.5 parts of styrene as an aromatic monovinyl monomer, 24.0 parts of n-butyl acrylate as a (meth)acrylic acid ester monomer, 10 parts of glycidyl methacrylate as a reactive functional group-containing monomer, 0.5 parts of ethylene glycol dimethacrylate as a cross-linkable monomer, 0.3 parts of sodium dodecylbenzenesulfonate as an emulsifier, 150 parts of deionized water, and 0.3 parts of potassium persulfate as a polymerization initiator. These materials were thoroughly stirred and were then heated to 80°C to initiate polymerization. Polymerization was continued until the polymerization conversion rate reached 96% to yield a water dispersion containing a particulate polymer A. At the point at which the conversion rate reached 96%, cooling was performed to quench the reaction to yield a water dispersion of the particulate polymer A.

The obtained water dispersion of the particulate polymer A was used to measure the glass-transition temperature, volume-average particle diameter, and degree of swelling in electrolyte solution of the particulate polymer A. The results are shown in Table 1.

### <Production of particulate polymer B>

A 5 MPa pressure-resistant vessel equipped with a stirrer was charged with 32.5 parts of 1,3-butadiene as an aliphatic conjugated diene monomer, 2 parts of itaconic acid as an acidic group-containing monomer, 65 parts of styrene as an aromatic monovinyl monomer, 0.5 parts of allyl methacrylate as a cross-linkable monomer, 0.4 parts of sodium dodecylbenzenesulfonate as an emulsifier, 150 parts by mass of deionized water, and 0.5 parts of potassium persulfate as a polymerization initiator. These materials were thoroughly stirred and were then heated to 50°C to initiate polymerization. At the point at which the polymerization conversion rate reached 96%, cooling was performed to quench the reaction to yield a mixture containing a polymer. The mixture containing the polymer was adjusted to pH 8 through addition of 5% sodium hydroxide aqueous solution and was subsequently subjected to thermal-vacuum distillation so as to remove unreacted monomer from the mixture. Thereafter, the mixture was cooled to 30°C or lower to yield a water dispersion of a particulate polymer B.

The obtained water dispersion of the particulate polymer B was used to measure the glass-transition temperature of the particulate polymer B. The result is shown in Table 1.

### <Production of slurry composition>

A mixture was obtained by mixing 100 parts (in terms of solid content) of the water dispersion of the particulate polymer A, 10 parts (in terms of solid content) of the water dispersion of the particulate polymer B, and 2 parts (in terms of solid content) of NOPTECHS^{®} ED-052 (NOPTECHS is a registered trademark in Japan, other countries, or both; produced by San Nopco Limited) as a wetting agent inside of a stirring vessel.

The obtained mixture was diluted with deionized water to obtain a slurry composition (solid content concentration: 10%). This slurry composition was used to produce a separator include a functional layer at one side in order to evaluate adhesiveness of a functional layer after immersion in electrolyte solution and blocking resistance. The results are shown in Table 1.

### <Production of separator>

A microporous membrane made of polyethylene (produced by Asahi Kasei Corporation; product name: ND412; thickness: 12 µm) was prepared. A ceramic slurry (produced by Zeon Corporation; product name: BM-2000M; containing alumina as non-conductive particles and a binder) was applied onto the surface of the prepared microporous membrane and was dried at a temperature of 50°C for 3 minutes to obtain a separator substrate including a porous membrane layer at one side (porous membrane layer thickness: 3 µm).

The slurry composition described above was applied onto the surface of the separator substrate described above at a side where the porous membrane layer had been provided and was dried at a temperature of 50°C for 3 minutes. The same operation was performed to apply the slurry composition onto the opposite surface of the separator substrate to the side at which the porous membrane layer had been provided and to thereby obtain a separator including functional layers at both sides (functional layer thickness: 0.6 µm each).

### <Production of negative electrode>

A 5 MPa pressure-resistant vessel equipped with a stirrer was charged with 32.5 parts of 1,3-butadiene as an aliphatic conjugated diene monomer, 2 parts of itaconic acid as an acidic group-containing monomer, 65 parts of styrene as an aromatic monovinyl monomer, 0.5 parts of allyl methacrylate as a cross-linkable monomer, 0.4 parts of sodium dodecylbenzenesulfonate as an emulsifier, 150 parts by mass of deionized water, and 0.5 parts of potassium persulfate as a polymerization initiator. These materials were thoroughly stirred and were then heated to 50°C to initiate polymerization. At the point at which the polymerization conversion rate reached 96%, cooling was performed to quench the reaction to yield a mixture containing a particulate binder (styrene-butadiene copolymer). This mixture was adjusted to pH 8 through addition of 5% sodium hydroxide aqueous solution and was subsequently subjected to thermal-vacuum distillation to remove unreacted monomer. Thereafter, the mixture was cooled to 30°C or lower to obtain a water dispersion containing a binder for a negative electrode.

A planetary mixer was charged with 48.75 parts of artificial graphite (theoretical capacity: 360 mAh/g) and 48.75 parts of natural graphite (theoretical capacity: 360 mAh/g) as negative electrode active materials and 1 part in terms of solid content of carboxymethyl cellulose as a thickener. These materials were diluted to a solid content concentration of 60% with deionized water and were subsequently kneaded at a rotation speed of 45 rpm for 60 minutes. Thereafter, 1.5 parts in terms of solid content of the water dispersion containing the binder for a negative electrode that was obtained as described above was added and was kneaded therewith at a rotation speed of 40 rpm for 40 minutes. The viscosity was then adjusted to 3,000 ± 500 mPa·s (measured by B-type viscometer at 25°C and 60 rpm) through addition of deionized water to produce a slurry composition for a negative electrode mixed material layer.

The slurry composition for a negative electrode mixed material layer was applied onto the surface of copper foil of 15 µm in thickness serving as a current collector by a comma coater such as to have a coating weight of 11 ± 0.5 mg/cm². Thereafter, the copper foil with the slurry composition for a negative electrode mixed material layer applied thereon was conveyed inside an oven having a temperature of 80°C for 2 minutes and an oven having a temperature of 110°C for 2 minutes at a speed of 400 mm/min so as to dry the slurry composition on the copper foil and obtain a negative electrode web having a negative electrode mixed material layer formed on the current collector.

Thereafter, the negative electrode mixed material layer-side of the produced negative electrode web was roll pressed with a line pressure of 11 t (tons) in an environment having a temperature of 25 ± 3°C to obtain a negative electrode having a negative electrode mixed material layer density of 1.60 g/cm³. This negative electrode was subsequently left in an environment having a temperature of 25 ± 3°C and a relative humidity of 50 ± 5% for 1 week.

### <Production of positive electrode>

A slurry composition for a positive electrode mixed material layer was produced by adding 96 parts of a lithium complex oxide of Co-Ni-Mn (CELLSEED^{®} (CELLSEED is a registered trademark in Japan, other countries, or both); NMC 111; LiNi_{1/3}Co_{1/3}Mn_{1/3}O₂) as a positive electrode active material, 2 parts of acetylene black (produced by Denka Company Limited; product name: HS-100) as a conductive material, and 2 parts of polyvinylidene fluoride (produced by Kureha Corporation; product name: KF-1100) as a binder into a planetary mixer, and then further adding and mixing N-methyl-2-pyrrolidone (NMP) as a dispersion medium so as to adjust the total solid content concentration to 67%.

The obtained slurry composition for a positive electrode mixed material layer was then applied onto aluminum foil of 20 µm in thickness serving as a current collector by a comma coater such as to have a coating weight of 20 ± 0.5 mg/cm².

The aluminum foil was conveyed inside an oven having a temperature of 90°C for 2 minutes and an oven having a temperature of 120°C for 2 minutes at a speed of 200 mm/min so as to dry the slurry composition on the aluminum foil and obtain a positive electrode web having a positive electrode mixed material layer formed on the current collector.

Thereafter, the positive electrode mixed material layer-side of the produced positive electrode web was roll pressed with a line pressure of 14 t (tons) in an environment having a temperature of 25 ± 3°C to obtain a positive electrode having a positive electrode mixed material layer density of 3.40 g/cm³. This positive electrode was subsequently left in an environment having a temperature of 25 ± 3°C and a relative humidity of 50 ± 5% for 1 week.

### <Production of secondary battery>

A wound cell (discharge capacity equivalent to 520 mAh) was produced using the separator, negative electrode, and positive electrode that were obtained as described above and was arranged inside of aluminum packing. The wound cell, together with the aluminum packing, was pressed with a temperature of 70°C and a pressure of 1.0 MPa for 8 seconds using a heating-type flat plate press machine so as to adhere the separator and the electrodes (negative electrode and positive electrode).

The inside of the aluminum packing was subsequently filled with electrolyte solution. Note that a solution obtained by dissolving LiPF₆ (supporting electrolyte) with a concentration of 1 mol/L in a mixed solvent of ethylene carbonate (EC), ethyl methyl carbonate (EMC), and vinylene carbonate (VC) (volume ratio: EC/EMC/VC = 68/30/2) was used as the electrolyte solution. The aluminum packing was then closed by heat sealing at a temperature of 150°C to tightly seal an opening of the aluminum packing, and thereby produce a lithium ion secondary battery. This lithium ion secondary battery was used to evaluate swelling resistance, rate characteristics, and cycle characteristics. The results are shown in Table 1.

### (Examples 2 and 3)

In production of the particulate polymer A, polymerization conditions in production of the particulate polymer A were changed such that the particulate polymer A had a volume-average particle diameter of 300 nm (Example 2) or 700 nm (Example 3). With the exception of the above, a particulate polymer A, a particulate polymer B, a slurry composition, a separator, a negative electrode, and a positive electrode were produced and a secondary battery was obtained in the same way as in Example 1. Various measurements and evaluations were performed in the same way as in Example 1. The results are shown in Table 1.

### (Example 4)

In production of the particulate polymer A, the amount of styrene as an aromatic monovinyl monomer was changed to 40.5 parts and the amount of glycidyl methacrylate as a reactive functional group-containing monomer was changed to 35 parts. With the exception of the above, a particulate polymer A, a particulate polymer B, a slurry composition, a separator, a negative electrode, and a positive electrode were produced and a secondary battery was obtained in the same way as in Example 1. Various measurements and evaluations were performed in the same way as in Example 1. The results are shown in Table 1.

### (Example 5)

In production of the particulate polymer A, the amount of styrene as an aromatic monovinyl monomer was changed to 45.5 parts and 30 parts of glycidyl vinyl ether was used instead of glycidyl methacrylate as a reactive functional group-containing monomer. With the exception of the above, a particulate polymer A, a particulate polymer B, a slurry composition, a separator, a negative electrode, and a positive electrode were produced and a secondary battery was obtained in the same way as in Example 1. Various measurements and evaluations were performed in the same way as in Example 1. The results are shown in Table 1.

### (Example 6)

In production of the particulate polymer A, 10 parts of methacryloxypropyltrimethoxysilane was used instead of glycidyl methacrylate as a reactive functional group-containing monomer. With the exception of the above, a particulate polymer A, a particulate polymer B, a slurry composition, a separator, a negative electrode, and a positive electrode were produced and a secondary battery was obtained in the same way as in Example 1. Various measurements and evaluations were performed in the same way as in Example 1. The results are shown in Table 1.

### (Examples 7 and 8)

In production of the particulate polymer A, the chemical composition of the particulate polymer A was changed such that the particulate polymer A had a glass-transition temperature of 40°C (Example 7) or 90°C (Example 8). With the exception of the above, a particulate polymer A, a particulate polymer B, a slurry composition, a separator, a negative electrode, and a positive electrode were produced and a secondary battery was obtained in the same way as in Example 1. Various measurements and evaluations were performed in the same way as in Example 1. The results are shown in Table 1.

### (Example 9)

In production of the particulate polymer A, the amount of styrene as an aromatic monovinyl monomer was changed to 65.9 parts and 0.1 parts of allyl methacrylate was used instead of ethylene glycol dimethacrylate as a cross-linkable monomer. With the exception of the above, a particulate polymer A, a particulate polymer B, a slurry composition, a separator, a negative electrode, and a positive electrode were produced and a secondary battery was obtained in the same way as in Example 1. Various measurements and evaluations were performed in the same way as in Example 1. The results are shown in Table 2.

### (Example 10)

In production of the particulate polymer A, 24 parts of 2-ethylhexyl acrylate was used instead of n-butyl acrylate as a (meth)acrylic acid ester monomer. With the exception of the above, a particulate polymer A, a particulate polymer B, a slurry composition, a separator, a negative electrode, and a positive electrode were produced and a secondary battery was obtained in the same way as in Example 1. Various measurements and evaluations were performed in the same way as in Example 1. The results are shown in Table 2.

### (Examples 11 and 12)

In production of the particulate polymer A, the chemical composition of the particulate polymer A was changed such that the polymer A had a degree of swelling in electrolyte solution of a factor of 1.4 (Example 11) or a factor of 2.8 (Example 12). With the exception of the above, a particulate polymer A, a particulate polymer B, a slurry composition, a separator, a negative electrode, and a positive electrode were produced and a secondary battery was obtained in the same way as in Example 1. Various measurements and evaluations were performed in the same way as in Example 1. The results are shown in Table 2.

### (Example 13)

In production of the particulate polymer A, the amount of styrene as an aromatic monovinyl monomer was changed to 64 parts and 1.5 parts of methacrylic acid as an acidic group-containing monomer was further used. With the exception of the above, a particulate polymer A, a particulate polymer B, a slurry composition, a separator, a negative electrode, and a positive electrode were produced and a secondary battery was obtained in the same way as in Example 1. Various measurements and evaluations were performed in the same way as in Example 1. The results are shown in Table 2.

### (Example 14)

In production of the particulate polymer B, an aromatic monovinyl monomer and an aliphatic conjugated diene monomer were not used, 2 parts of methacrylic acid was used instead of 2 parts of itaconic acid as an acidic group-containing monomer, and 95 parts of n-butyl acrylate as a (meth)acrylic acid ester monomer and 2.5 parts of acrylonitrile as a cyano group-containing monomer were further used. With the exception of the above, a particulate polymer A, a particulate polymer B, a slurry composition, a separator, a negative electrode, and a positive electrode were produced and a secondary battery was obtained in the same way as in Example 1. Various measurements and evaluations were performed in the same way as in Example 1. The results are shown in Table 2.

### (Example 15)

In production of the particulate polymer B, the amount of styrene as an aromatic monovinyl monomer was changed to 25 parts, an aliphatic conjugated diene monomer was not used, 3 parts of methacrylic acid was used instead of 2 parts of itaconic acid as an acidic group-containing monomer, and 71.5 parts of 2-ethylhexyl acrylate as a (meth)acrylic acid ester monomer was further used. With the exception of the above, a particulate polymer A, a particulate polymer B, a slurry composition, a separator, a negative electrode, and a positive electrode were produced and a secondary battery was obtained in the same way as in Example 1. Various measurements and evaluations were performed in the same way as in Example 1. The results are shown in Table 2.

### (Example 16)

In production of the particulate polymer A, the amount of styrene as an aromatic monovinyl monomer was changed to 70.5 parts and the amount of glycidyl methacrylate as a reactive functional group-containing monomer was changed to 5 parts. With the exception of the above, a particulate polymer A, a particulate polymer B, a slurry composition, a separator, a negative electrode, and a positive electrode were produced and a secondary battery was obtained in the same way as in Example 1. Various measurements and evaluations were performed in the same way as in Example 1. The results are shown in Table 2.

### (Comparative Example 1)

In production of the particulate polymer A, the amount of styrene as an aromatic monovinyl monomer was changed to 75.5 parts and a reactive functional group-containing monomer was not used. With the exception of the above, a particulate polymer A, a particulate polymer B, a slurry composition, a separator, a negative electrode, and a positive electrode were produced and a secondary battery was obtained in the same way as in Example 1. Various measurements and evaluations were performed in the same way as in Example 1. The results are shown in Table 3.

### (Comparative Examples 2 and 3)

In production of the particulate polymer A or the particulate polymer B, polymerization conditions of the particulate polymer A or the particulate polymer B were changed such that the particulate polymer A had a glass-transition temperature of 20°C (Comparative Example 2) or the particulate polymer B had a glass-transition temperature of 40°C (Comparative Example 3). With the exception of the above, a particulate polymer A, a particulate polymer B, a slurry composition, a separator, a negative electrode, and a positive electrode were produced and a secondary battery was obtained in the same way as in Example 1. Various measurements and evaluations were performed in the same way as in Example 1. The results are shown in Table 3.

In Tables 1 to 3, shown below:
"BA" indicates n-butyl acrylate unit;
"2EHA" indicates 2-ethylhexyl acrylate unit;
"ST" indicates styrene unit;
"GMA" indicates glycidyl methacrylate unit;
"GVB" indicates glycidyl vinyl ether unit;
"AsSi" indicates methacryloxypropyltrimethoxysilane unit;
"EDMA" indicates ethylene glycol dimethacrylate unit;
"AMA" indicates allyl methacrylate unit;
"MAA" indicates methacrylic acid unit;
"BD" indicates 1,3-butadiene unit;
"IA" indicates itaconic acid monomer unit; and
"AN" indicates acrylonitrile unit.

**[Table 1]**

| | | | | Example 1 | Example 2 | Example 3 | Example 4 | Example 5 | Example 6 | Example 7 | Example 8 |
|---|---|---|---|---|---|---|---|---|---|---|---|
| | Particulate polymer A | (Meth)acrylic acid ester monomer unit [mass%] | BA | 24 | 24 | 24 | 24 | 24 | 24 | 39 | 14 |
| | | | 2EHA | - | - | - | - | - | - | - | - |
| | | Aromatic monovinvl monomer unit [mass%] | ST | 65.5 | 65.5 | 65.5 | 40.5 | 45.5 | 65.5 | 50.5 | 75.5 |
| | | Reactive functional group-containing monomer unit [mass%] | GMA | 10 | 10 | 10 | 35 | - | - | 10 | 10 |
| | | | GVB | - | - | - | - | 30 | - | - | - |
| | | | AsSi | - | - | - | - | - | 10 | - | - |
| | | Cross-linkable monomer unit [mass%] | EDMA | 0.5 | 0.5 | 0.5 | 0.5 | 0.5 | 0.5 | 0.5 | 0.5 |
| | | | AMA | - | - | - | - | - | - | - | - |
| | | Acidic group-containing monomer unit [mass%] | MAA | - | - | - | - | - | - | - | - |
| Slurry | | Glass-transition temperature (Tg) [°C] | | 70 | 70 | 70 | 70 | 70 | 70 | 40 | 90 |
| composition | | Volume-average particle diameter [nm] | | 500 | 300 | 700 | 500 | 500 | 500 | 500 | 500 |
| for functional | | Degree of swelling in electrolyte solution [-] | | 2 | 2 | 2 | 2 | 2 | 2 | 2 | 2 |
| layer | Particulate polymer B | Aromatic monovinyl monomer unit [mass%] | ST | 65 | 65 | 65 | 65 | 65 | 65 | 65 | 65 |
| | | Aliphatic conjugated diene monomer unit [mass%] | BD | 32.5 | 32.5 | 32.5 | 32.5 | 32.5 | 32.5 | 32.5 | 32.5 |
| | | Acidic group-containing monomer unit [mass%] | MAA | - | - | - | - | - | - | - | - |
| | | | IA | 2 | 2 | 2 | 2 | 2 | 2 | 2 | 2 |
| | | (Meth)acrylic acid ester monomer unit [mass%] | BA | - | - | - | - | - | - | - | - |
| | | | 2EHA | - | - | - | - | - | - | - | - |
| | | Cyano group-containing monomer unit [mass%] | AN | - | - | - | - | - | - | - | - |
| | | Cross-linkable monomer unit [mass%] | AMA | 0.5 | 0.5 | 0.5 | 0.5 | 0.5 | 0.5 | 0.5 | 0.5 |
| | | Glass-transition temperature (Tg) [°C] | | -20 | -20 | -20 | -20 | -20 | -20 | -20 | -20 |
| | Mass ratio of particulate polymer A and particulate polvmer B (A:B) | | | 100:10 | 100:10 | 100:10 | 100:10 | 100:10 | 100:10 | 100:10 | 100:10 |
| Evaluation | Adhesiveness of functional layer after immersion in electrolyte solution | | | A | B | B | B | A | B | A | B |
| | Blocking resistance | | | A | A | A | A | A | A | B | A |
| | Swelling resistance | | | A | B | B | B | A | B | A | B |
| | Rate characteristics | | | A | A | A | A | A | A | B | A |
| | Cvcle characteristics | | | A | A | A | A | A | A | B | A |

**[Table 2]**

| | | | | Example 9 | Example 10 | Example 11 | Example 12 | Example 13 | Example 14 | Example 15 | Example 16 |
|---|---|---|---|---|---|---|---|---|---|---|---|
| | Particulate polymer A | (Meth)acrylic acid ester monomer unit [mass%] | BA | 24 | - | 24 | 24 | 24 | 24 | 24 | 24 |
| | | | 2EHA | - | 24 | - | - | - | - | - | - |
| | | Aromatic monovinyl monomer unit [mass%] | ST | 65.9 | 65.5 | 65.8 | 65.2 | 64 | 65.5 | 65.5 | 70.5 |
| | | Reactive functional group-containing monomer unit [mass%] | GMA | 10 | 10 | 10 | 10 | 10 | 10 | 10 | 5 |
| | | | GVB | - | - | - | - | - | - | - | - |
| | | | AsSi | - | - | - | - | - | - | - | - |
| | | Cross-linkable monomer unit [mass%] | EDMA | - | 0.5 | 0.2 | 0.8 | 0.5 | 0.5 | 0.5 | 0.5 |
| | | | AMA | 0.1 | - | - | - | - | - | - | - |
| Slurry | | Acidic group-containing monomer unit [mass%] | MAA | - | - | - | - | 1.5 | - | - | - |
| composition for | | Glass-transition temperature (Tg) [°C] | | 70 | 70 | 70 | 70 | 70 | 70 | 70 | 70 |
| functional | | Volume-average particle diameter [nm] | | 500 | 500 | 500 | 500 | 500 | 500 | 500 | 500 |
| layer | | Degree of swelling in electrolyte solution [-] | | 2 | 2 | 1.4 | 2.8 | 2 | 2 | 2 | 2 |
| | Particulate polymer B | Aromatic monovinyl monomer unit [mass%] | ST | 65 | 65 | 65 | 65 | 65 | - | 25 | 65 |
| | | Aliphatic conjugated diene monomer unit [mass%] | BD | 32.5 | 32.5 | 32.5 | 32.5 | 32.5 | - | - | 32.5 |
| | | Acidic group-containing monomer unit [mass%] | MAA | - | - | - | - | - | 2 | 3 | - |
| | | | IA | 2 | 2 | 2 | 2 | 2 | - | - | 2 |
| | | (Meth)acrylic acid ester monomer unit [mass%] | BA | - | - | - | - | - | 95 | - | - |
| | | | 2EHA | - | - | - | - | - | - | 71.5 | - |
| | | Cyano group-containing monomer unit [mass%] | AN | - | - | - | - | - | 2.5 | - | - |
| | | Cross-linkable monomer unit [mass%] | AMA | 0.5 | 0.5 | 0.5 | 0.5 | 0.5 | 0.5 | 0.5 | 0.5 |
| | | Glass-transition temperature (Tg) [°C] | | -20 | -20 | -20 | -20 | -20 | -20 | -20 | -20 |
| | Mass ratio of particulate polymer A and particulate polymer B (A:B) | | | 100:10 | 100:10 | 100:10 | 100:10 | 100:10 | 100:10 | 100:10 | 100:10 |
| Evaluation | Adhesiveness of functional layer after immersion in electrolyte solution | | | A | A | B | A | A | A | A | B |
| | Blocking resistance | | | A | A | A | A | A | A | A | A |
| | Swelling resistance | | | A | A | B | A | A | A | A | C |
| | Rate characteristics | | | A | A | A | B | A | A | A | A |
| | Cycle characteristics | | | A | A | A | B | A | A | A | B |

**[Table 3]**

| | | | | Comparative Example 1 | Comparative Example 2 | Comparative Example 3 |
|---|---|---|---|---|---|---|
| Slurry composition for functional layer | Particulate polymer A | (Meth)acrylic acid ester monomer unit [mass%] | BA | 24 | 24 | 24 |
| | | | 2EHA | - | - | - |
| | | Aromatic monovinyl monomer unit [mass%] | ST | 75.5 | 65.5 | 65.5 |
| | | Reactive functional group-containing monomer unit [mass%] | GMA | - | 10 | 10 |
| | | | GVB | | - | - |
| | | | AsSi | - | - | - |
| | | Cross-linkable monomer unit [mass%] | EDMA | 0.5 | 0.5 | 0.5 |
| | | | AMA | - | - | - |
| | | Acidic group-containing monomer unit [mass%] | MAA | - | - | - |
| | | Glass-transition temperature (Tg) [°C] | | 70 | 20 | 70 |
| | | Volume-average particle diameter [nm] | | 500 | 500 | 500 |
| | | Degree of swelling in electrolyte solution [-] | | 2 | 2 | 2 |
| | Particulate polymer B | Aromatic monovinyl monomer unit [mass%] | ST | 65 | 65 | 65 |
| | | Aliphatic conjugated diene monomer unit [mass%] | BD | 32.5 | 32.5 | 32.5 |
| | | Acidic group-containing monomer unit [mass%] | MAA | - | - | - |
| | | | IA | 2 | 2 | 2 |
| | | (Meth)acrylic acid ester monomer unit [mass%] | BA | - | - | - |
| | | | 2EHA | - | - | - |
| | | Cyano group-containing monomer unit [mass%] | AN | - | - | - |
| | | Cross-linkable monomer unit [mass%] | AMA | 0.5 | 0.5 | 0.5 |
| | | Glass-transition temperature (Tg) [°C] | | -20 | -20 | 40 |
| | Mass ratio of particulate polymer A and particulate polymer B (A:B) | | | 100:10 | 100:10 | 100:10 |
| Evaluation | Adhesiveness of functional layer after immersion in electrolyte solution | | | C | B | C |
| | Blocking resistance | | | A | C | A |
| | Swelling resistance | | | C | B | C |
| | Rate characteristics | | | A | C | A |
| | Cycle characteristics | | | C | D | C |

It can be seen from Tables 1 and 2 that it is possible to produce a functional layer having excellent adhesiveness after immersion in electrolyte solution and a separator having excellent blocking resistance and that rate characteristics and cycle characteristics of an obtained secondary battery are excellent in Examples 1 to 16 in which the used slurry composition contains a particulate polymer A that includes a reactive functional group-containing monomer unit and has a glass-transition temperature and a volume-average particle diameter within specific ranges and a particulate polymer B that has a glass-transition temperature of lower than a specific value.

In contrast, it can be seen from Table 3 that cycle characteristics of an obtained secondary battery deteriorate in Comparative Example 1 in which a particulate polymer A does not include a reactive functional group-containing monomer unit, Comparative Example 2 in which a particulate polymer A has a glass-transition temperature that is outside of a specific range, and Comparative Example 3 in which a particulate polymer B has a glass-transition temperature that is higher than a specific upper limit.

### INDUSTRIAL APPLICABILITY

According to the present disclosure, it is possible to provide a slurry composition for a non-aqueous secondary battery functional layer that is capable of forming a functional layer having excellent adhesiveness after immersion in electrolyte solution and that is capable of causing a secondary battery to display excellent battery characteristics.

Moreover, according to the present disclosure, it is possible to provide a separator for a non-aqueous secondary battery that has good adhesiveness with an adjacent battery member after immersion in electrolyte solution and that is capable of causing a secondary battery to display excellent battery characteristics.

Furthermore, according to the present disclosure, it is possible to provide a non-aqueous secondary battery that has excellent battery characteristics.

## Claims

1. A slurry composition for a non-aqueous secondary battery functional layer comprising: a particulate polymer A including a reactive functional group-containing monomer unit; and a particulate polymer B, wherein
the particulate polymer A has a glass-transition temperature of not lower than 30°C and not higher than 95°C,
the particulate polymer B has a glass-transition temperature of lower than 30°C, and
the particulate polymer A has a volume-average particle diameter of not less than 250 nm and not more than 800 nm.

2. The slurry composition for a non-aqueous secondary battery functional layer according to claim 1, wherein proportional content of the reactive functional group-containing monomer unit in the particulate polymer A is not less than 8 mass% and not more than 40 mass%.

3. The slurry composition for a non-aqueous secondary battery functional layer according to claim 1, wherein the particulate polymer A has a degree of swelling in electrolyte solution of not less than a factor of 1.2 and not more than a factor of 3.

4. The slurry composition for a non-aqueous secondary battery functional layer according to claim 1, wherein a mass ratio of the particulate polymer A and the particulate polymer B is 100: 1 to 100:25.

5. A separator for a non-aqueous secondary battery comprising: a separator substrate; and a functional layer formed on at least one side of the separator substrate, wherein the functional layer is a dried product of the slurry composition for a non-aqueous secondary battery functional layer according to any one of claims 1 to 4.

6. A non-aqueous secondary battery comprising a positive electrode, a negative electrode, a separator, and an electrolyte solution, wherein the separator is the separator for a non-aqueous secondary battery according to claim 5.
